# EUROPÄISCHE PATENTSCHRIFT

(11) **EP 3 372 140 B1**
(45) Veröffentlichungstag und Bekanntmachung des Hinweises auf die Patenterteilung: **01.06.2022**
(21) Anmeldenummer: 18160009.9
(22) Anmeldetag: 05.03.2018
(51) Int. Cl.: A47L 15/42, D06F 39/00

(54) **GESCHIRRSPÜLMASCHINE, INSBESONDERE HAUSHALTSGESCHIRRSPÜLMASCHINE**
DISHWASHER, IN PARTICULAR DOMESTIC DISHWASHER
LAVE-VAISSELLE, EN PARTICULIER LAVE-VAISSELLE ÉLECTROMÉNAGER

(30) Priorität: 01.09.2017 DE 102017120163; 08.03.2017 DE 102017104915; 23.05.2017 DE 102017111187
(43) Veröffentlichungstag der Anmeldung: 12.09.2018
(73) Patentinhaber: Miele & Cie. KG, 33332 Gütersloh (DE)
(72) Erfinder: Dahms, Tobias, 30519 Hannover (DE); Bertram, Andre, 33609 Bielefeld (DE); Wolf, Cornelius, 33739 Bielefeld (DE); Nierling, Andreas, 49326 Melle (DE); Steinmeier, Ralph, 32052 Herford (DE); Gießel, Michael, 33699 Bielefeld (DE); Stanke, Benjamin, 33604 Bielefeld (DE); Kornfeld, André, 33378 Rheda-Wiedenbrück (DE); Busse, Christoph, 32549 Bad Oeynhausen (DE)

(56) Entgegenhaltungen:
- EP-A1- 2 471 434
- EP-A2- 0 669 097
- EP-A2- 1 864 603
- EP-A2- 2 322 072
- EP-A2- 2 578 133
- CH-A2- 699 692
- DE-A1-102014 104 369
- DE-A1-102015 203 532
- ES-T3- 2 384 778
- US-A1- 2011 048 459

## Beschreibung

Die Erfindung betrifft eine Geschirrspülmaschine, insbesondere eine Haushaltsgeschirrspülmaschine, mit einem einen Spülraum bereitstellenden Spülbehälter, der der Aufnahme von zu reinigendem Spülgut dient, und einer Wärmepumpeneinrichtung, die einen Verdampfer aufweist, der innerhalb eines Wassertanks angeordnet ist. Ferner betrifft die Erfindung ein Verfahren zum Betrieb einer Geschirrspülmaschine.

Eine gattungsgemäße Geschirrspülmaschine ist aus der EP 3 141 176 A1 bekannt.

Die vorbekannte Geschirrspülmaschine verfügt über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dgl. handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülgutes mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt.

Geschirrspülmaschinen können bekanntermaßen mit einer Wärmepumpeneinrichtung ausgestattet sein, um den Energieverbrauch insbesondere bei einem Aufheizen der Spülflotte zu reduzieren.

Die aus der EP 3 141 176 A1 bekannte Geschirrspülmaschine verfügt über eine sogenannte Wasser-Wasser-Wärmepumpeneinrichtung. Im bestimmungsgemäßen Verwendungsfall wird mit einer solchen Wärmepumpeneinrichtung einem Flüssigkeitsreservoir Wärmeenergie entzogen. Die EP 3 141 176 A1 sieht zu diesem Zweck einen offenen Wassertank vor, der den Verdampfer der Wärmepumpeneinrichtung beherbergt. Im Betriebsfall kommt es infolge eines Wärmeenergieentzugs zu einer Abkühlung des im Tank als Wärmeträgermedium bevorrateten Wassers. Eine solche Abkühlung kann bis zur Vereisung des Wassers vorgenommen werden.

Von grundsätzlicher Problematik bei der Verwendung einer Wasser-Wasser-Wärmepumpeneinrichtung ist, dass ein bestimmungsgemäßer Einsatz der Geschirrspülmaschine unter gleichzeitiger Nutzung der Wärmepumpeneinrichtung energetisch nur dann sinnvoll ist, wenn das im Wassertank bevorratete und als Wärmeträgermedium dienende Wasser eine gewisse Mindesttemperatur aufweist. Sollte das Wasser nach einer vorangegangenen Geschirrspülmaschinenbenutzung noch zu kühl oder sogar gefroren sein, muss mit einem bestimmungsgemäßen Einsatz der Wärmepumpeneinrichtung bis zum Erreichen der Mindesttemperatur des Wassers gewartet werden, was bei noch gefrorenem Wasser durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich.

Um diesem Problem zu begegnen, ist mit der EP 3 141 176 A1 unter anderem vorgeschlagen worden, innerhalb des Wassertanks einen Wärmetauscher anzuordnen. Dieser Wärmetauscher ist strömungstechnisch an den Spülraum angeschlossen, so dass zum Ende eines Spülprogramms noch warme Spülflotte durch den Wärmetauscher gepumpt werden kann, bevor sie zur Beendigung des Spülprogramms durch Abpumpen verworfen wird. Der Wärmetauscher erlaubt mithin eine Energierückführung aus der noch warmen, aber nicht mehr benötigten Spülflotte auf das im Tank bevorratete Wasser.

Die DE 102015203532 A1 offenbart eine Geschirrspülmaschine mit einem Spülbehälter und einer Wärmepumpeneinrichtung, aufweisend einen in einem Wassertank angeordneten Verdampfer und einen Verflüssiger, mit dem Wärme auf die Spülflotte übertragen werden kann. Der Wassertank ist an einer ersten Seitenwand am Spülbehälter unter Zwischenordnung eines Isolationsmaterialsystems angeordnet. An einer zweiten Seitenwand am Spülbehälter ist darüber hinaus ein Wasserbehälter angeordnet, in den Wasser aus dem Wassertank überlaufen kann.

Die EP 1864603 A2 offenbart eine Geschirrspülmaschine mit einem Spülbehälter und einer Wärmepumpeneinrichtung, aufweisend einen in dem Solebehälter der Wasserentkalkungsvorrichtung der Geschirrspülmaschine angeordneten Verdampfer und einen Verflüssiger, mit dem Wärme auf die Spülflotte übertragen werden kann. Zum Regenerieren des lonentauscherharz im Harzbehälter kann Solewasser aus dem Solebehälter in den Harzbehälter geleitet werden.

Die CH 699692 A2 offenbart eine Geschirrspülmaschine mit einem Spülbehälter und einer Wärmepumpeneinrichtung, aufweisend einen in einem ersten Wassertank angeordneten ersten Verdampfer und einen in einem zweiten Wassertank angeordneten zweiten Verdampfer sowie einen Verflüssiger, mit dem Wärme auf die Spülflotte übertragen werden kann. Im Spülbehälter bereits verwendete Spülflotte kann den Wassertanks zugeführt und dort zwischengespeichert, wobei ihr mittels der Verdampfer Wärme entzogen werden kann.

Die EP 2 322 072 A2 offenbart ebenfalls eine Geschirrspülmaschine mit einem Spülbehälter und einer Wärmepumpeneinrichtung, aufweisend einen in einem Wassertank angeordneten Verdampfer und einen Verflüssiger, mit dem Wärme auf die Spülflotte übertragen werden kann. Außerdem ist ein zusätzlicher Fluidkreislauf vorhanden, durch den ein Fluid zwischen einem im Wassertank angeordneten Wärmetauscher und einem an dem Spülbehälter nebengeordneten Wärmetauscher zirkulieren kann.

Es ist die **Aufgabe** der Erfindung, eine alternative Konstruktion vorzuschlagen, die einen Wärmeeintrag in das vom Wassertank der Wärmepumpeneinrichtung bevorratete Wasser ermöglicht, und zwar mit der Zielsetzung, einer im Vergleich zum Stand der Technik schnelleren thermischen Regeneration.

Zur **Lösung** dieser Aufgabe wird mit der Erfindung eine Geschirrspülmaschine mit den Merkmalen von Anspruch 14 vorgeschlagen.

Erfindungsgemäß ist ein zum Wassertank der Wärmepumpeneinrichtung separater Wasserbehälter vorgesehen, d.h. ein zweiter Wassertank. Der Wasserbehälter ist dem Spülbehälter nebengeordnet, vorzugsweise benachbart zu einer in Beschickungsrichtung der Geschirrspülmaschine seitlichen Spülbehälterwand. Der Wasserbehälter steht in strömungstechnischer Verbindung mit dem Wassertank, so dass Wasser aus dem Wassertank in den Wasserbehälter überführt werden kann und umgekehrt.

Die strömungstechnische Verbindung von Wassertank und Wasserbehälter ermöglicht es, während der Durchführung und/oder nach Ablauf eines Spülprogramms im Wassertank befindliches Wasser dadurch thermisch zu regenerieren, d.h. aufzuwärmen, dass es in den spülbehälternahen Wasserbehälter überführt wird, wo dann ein Wärmeübertrag vom warmen Spülbehälter, d.h. aus der vom Spülbehälter bevorrateten noch warmen Beladung und/oder Spülflotte auf das im Wasserbehälter befindliche Wasser stattfinden kann. Das so aufgewärmte Wasser kann dann aus dem Wasserbehälter zurück in den Wassertank überführt werden, was zu einem schnelleren Auftauen von sich dort befindlichem Eis führt, so dass im Ergebnis eine schnellere thermische Regeneration durch Wärmerückgewinnung erreicht ist. Dabei wird die Befüllung des Wasserbehälters mit aus dem Wassertank stammendem Wasser einschließlich der Rückführung von im Wasserbehälter erwärmtem Wasser zurück in den Wassertank wiederholt durchgeführt, was zu einer deutlichen Reduzierung der Regenerationszeit mit dem Ergebnis führt, dass die erfindungsgemäß ausgebildete Geschirrspülmaschine sehr viel früher auch mit bestimmungsgemäßer Nutzung der Wärmepumpeneinrichtung wieder einsetzbar ist, als dies vorbekannte Geschirrspülmaschinen gestatten.

Der als Energiespeicher genutzte Wassertank der Wasser-Wasser-Wärmepumpeneinrichtung hat typischerweise ein Fassungsvermögen von 3,0 I bis 12,0 I, vorzugsweise von 3,5 I bis 6 I. Eine Befüllung des Wassertanks erfolgt bevorzugterweise mit enthärtetem Frischwasser. Am Ende eines Spülprogramms ist der Wassertank ganz oder teilweise eingefroren. Um die Wärmepumpeneinrichtung in einem dem beendeten Spülprogramm nachfolgenden Spülprogramm nutzen zu können, muss der Wassertank ausreichend thermisch regeneriert, d.h. das darin befindliche Eis aufgetaut sein. Aus energetischen Gründen ist der Phasenwechsel, d.h. das Auftauen vollständig abgeschlossen und die Wassertemperatur liegt bei über 0°C, vorzugsweise zwischen 10°C und 25°C, noch mehr vorgezogen 15°C und 25°C, insbesondere Raumtemperatur, bevor ein neues Spülprogramm gestartet wird.

Am Ende eines Spülprogramms sind ca. 2 bis 4,5 kg Wasser eingefroren. Je nach geometrischer Ausgestaltung des Wassertanks kann ein Auftauen von ca. 2 kg bis 4,5 Eis bei einer Raumtemperatur von z.B. 23°C 20 Stunden und länger dauern. Mit der erfindungsgemäßen Ausgestaltung und der damit bewirkten Aufheizung des Wassers durch Wärmerückgewinnung wird eine Regenerationszeit von unter 12 Stunden, vorzugsweise von unter 8 Stunden, insbesondere unter 6 Stunden erreicht. Dies ist im Unterschied zum Stand der Technik eine erhebliche Verkürzung der Regenerationszeit, so dass die erfindungsgemäße Geschirrspülmaschine nach einem bestimmungsgemäßen Nutzen der Wärmepumpeneinrichtung sehr viel schneller wieder einsetzbar ist.

Der Wasserbehälter ist außenseitig am Spülbehälter angeordnet. Dabei kann es sich bei dem Wasserbehälter um einen Frischwassertank, eine Wassertasche oder dgl. Behältnis handeln, das ohnehin schon als Baukomponente der Geschirrspülmaschine vorhanden ist. So sind beispielsweise aus dem Stand der Technik sogenannte Wassertaschen bekannt, die am Ende eines Spülprogramms mit Frischwasser aufgefüllt werden und dann zu Beginn eines nachfolgenden Spülprogramms auf Raumtemperatur erwärmtes Frischwasser beherbergen, das in den Spülraum der Geschirrspülmaschine eingelassen wird. Diese ohnehin schon vorhandene Wassertasche kann beispielsweise als Wasserbehälter im Sinne der erfindungsgemäßen Ausgestaltung genutzt werden.

Um einen möglichst guten Wärmeübertrag vom Spülbehälter, dessen Beladung und/oder aus der Spülflotte auf das im Wasserbehälter befindliche Wasser zu ermöglichen, sind der Spülbehälter und der Wasserbehälter thermisch miteinander gekoppelt. Dies kann in einfachster Weise dadurch erreicht werden, dass der Spülbehälter ohne Ausbildung einer thermischen Trennung direkt außenseitig an der Außenwand des Spülbehälters angeordnet ist, so dass ein möglichst großflächiger Kontaktbereich zwischen Spülbehälterwand und daran anliegender Wasserbehälterwand erreicht ist. Bevorzugt ist in diesem Zusammenhang ferner, den Wasserbehälter aus einem dünnwandigen Kunststoffmaterial zu bilden, was ebenfalls förderlich für den gewünschten Wärmeübergang ist.

Der Wassertank ist indes gemäß einem weiteren Merkmal der Erfindung thermisch vom Spülbehälter entkoppelt. Dies deshalb, weil es im bestimmungsgemäßen Verwendungsfall zum Einfrieren des Wassertanks kommt und es vermieden werden soll, das der eingefrorene Wassertank dem Spülbehälter ungewollt Wärmeenergie entzieht. Denn während beispielsweise eine Aufheizphase der Spülflotte, d.h. bei laufendem Betrieb der Wärmepumpeneinrichtung soll zur möglichst schnellen Erreichung der Zieltemperatur der Spülflotte dem Spülbehälter keine Wärmeenergie entzogen werden. Erst zum Ende eines Spülprogramms, wenn die aufgeheizte Spülflotte für eine Reinigung des Spülguts nicht mehr benötigt wird, soll ein Wärmeübergang von der noch warmen Spülflotte auf den Wassertank stattfinden, was erfindungsgemäß mit Hilfe des dem Spülbehälter nebengeordneten Wasserbehälters stattfindet, indem in schon vorbeschriebener Weise aus dem Wassertank stammendes kaltes Wasser in den Wasserbehälter überführt und nach einer dortigen Erwärmung zurück in den Wassertank geleitet wird.

Gemäß einem weiteren Merkmal der Erfindung ist vorgesehen, dass der Spülbehälter Abschnitte mit unterschiedlichen Größenabmessungen insbesondere in Dickenrichtung aufweist.

Ein besonders guter Wärmeübergang auf im Spülbehälter befindliches Wasser wird dann erreicht, wenn das Wasser möglichst vollflächig an der Wasserbehälterwand und damit auch an der gegenüberliegenden Spülbehälterseitenwand anliegt. Da zu Beginn einer thermischen Regeneration der Wassertank noch größtenteils eingefroren ist, steht nur wenig "Eiswasser" zur Verfügung, das in den Wasserbehälter überführt werden kann. Ein dementsprechend niedriger Wasserpegel bildet sich im Wasserbehälter aus, so dass die Kontaktfläche zwischen Wasser und Spülbehälterseitenwand entsprechend gering ausfällt. Erfindungsgemäß ist deshalb vorgesehen, den Wasserbehälter mit einem Abschnitt auszurüsten, der in Dickenrichtung vergleichsweise dünn ausgebildet ist. Dies erbringt den Vorteil, dass in den Wasserbehälter eingefülltes Wasser aufgrund der reduzierten Breite des Wasserbehälters in Dickenrichtung einen höheren Füllstand innerhalb des Wasserbehälters erreicht, was im Ergebnis zu einer größeren Kontaktfläche zur Spülbehälterseitenwand führt. Folglich kann ein gesteigerter Wärmeeintrag in das im Wasserbehältnis befindliche Wasser erreicht werden.

Aus gleichem Grund wird gemäß einem weiteren Merkmal der Erfindung vorgeschlagen, dass der vom Vorratsbehälter bereitgestellte Volumenraum in Kammern unterteilt ist. Dabei ist es bevorzugt, eine hinsichtlich des erfassten Volumenraums erste kleine Kammer sowie eine zweite, große Kammer vorzusehen. Dabei ist die kleine Kammer vorzugsweise spülbehälterwandseitig ausgebildet, so dass bei einer Befüllung nur der ersten Kammer des Wasserbehälters eine vergleichsweise große Kontaktfläche zwischen Wasser und Spülbehälterseitenwand ausgebildet wird. Erst wenn die thermische Regeneration so weit vorangeschritten ist, dass zuvor eingefrorenes Wasser wieder aufgetaut und deshalb eine größere Menge an Wasser aus dem Wassertank in den Wasserbehälter überführt werden kann, erfolgt eine Nutzung auch der zweiten Kammer.

Gemäß einem weiteren Merkmal der Erfindung ist vorgesehen, dass der Wasserbehälter und/oder der Wassertank an den Spülbehälter strömungstechnisch angeschlossen sind/ist. Gemäß dieser alternativen Ausgestaltung ist vorgesehen, dass nicht nur Wasser aus dem Wassertank in den Wasserbehälter und umgekehrt geführt werden kann, sondern dass wahlweise auch Wasser aus dem Wassertank in den Spülbehälter und/oder Wasser aus dem Wasserbehälter in den Spülbehälter überführt werden kann. Es ist insoweit möglich, verschiedenste Wasserwege zu nutzen und somit den gewünschten Wärmeübergang noch weiter zu verbessern. Ferner gestattet es die strömungstechnische Verbindung zwischen Spülbehälter und Wasserbehälter und/oder Wassertank im Spülbehälter bereits befindliche Sensorik, wie insbesondere Temperatursensorik zu nutzen, um Messwerte bezüglich des aus dem Wassertank und/oder aus dem Wasserbehälter stammenden Wassers zu erfassen. Dies gestattet eine optimierte Verfahrensdurchführung unter Nutzung der Gerätsteuerelektronik.

Gemäß einem weiteren Merkmal der Erfindung ist vorgesehen, dass der Wasserbehälter und/oder der Wassertank an einen Frischwasseranschluss strömungstechnisch angeschlossen sind/ist. Auch durch diese konstruktive Maßnahme werden unterschiedliche Verfahrensweisen zum Betrieb der Geschirrspülmaschine ermöglicht. So ist es wahlweise gestattet, den Wassertank und/oder den Wasserbehälter im Betriebsfall mit Frischwasser zu befüllen. Und dies in Kombination oder alternativ zu einer herkömmlichen Frischwasserbeschickung des Spülbehälters.

Gemäß einem weiterem Merkmal der Erfindung ist vorgesehen, dass innerhalb des Wasserbehälters ein Wärmetauscher angeordnet ist, der an den Spülbehälter strömungstechnisch angeschlossen ist. Durch diesen Wärmetauscher kann im Betriebsfall aus dem Spülbehälter stammende warme Spülflotte geführt werden. Im Wasserbehälter befindliches Wasser kann so durch einen nochmals verbesserten Wärmeübergang schneller aufgewärmt werden.

Gemäß einem weiteren Merkmal der Erfindung ist vorgesehen, dass der Wasserbehälter auf seiner dem Spülbehälter abgewandten Seite, also auf seiner dem Gehäuse der Geschirrspülmaschine zugewandten Seite, mit einer Dämmschicht versehen ist. Hierdurch wird eine etwaige außenseitige Betauung verhindert.

Verfahrensseitig wird zur **Lösung** der Erfindung ein Verfahren zum Betrieb einer Geschirrspülmaschine mit den Merkmalen von Anspruch 1 vorgeschlagen.

Nach einem bestimmungsgemäßen Einsatz der Wärmepumpeneinrichtung ist das vom Wassertank bevorratete Wasser zumindest teilweise eingefroren. Das verbleibende Restwasser, auch Eiswasser genannt, wird in Entsprechung des erfindungsgemäßen Verfahrens zumindest teilweise abgeführt und in den Wasserbehälter überführt. Dies kann entweder noch während der Durchführung eines Spülprogramms stattfinden und/oder nach Abschluss eines Spülprogramms. Besonders bevorzugt ist es indes, eine solche Wasserüberführung in den Wasserbehälter mit Beendigung des Klarspülschrittes zu beginnen.

Das in den Wasserbehälter überführte Wasser wird in schon vorbeschriebener Weise durch einen Wärmeeintrag aus dem Spülbehälter aufgewärmt. Das aufgewärmte Wasser wird dann anschließend in den Wassertank rücküberführt, so dass sich im Wassertank eine Mischtemperatur aus Bestandswasser einerseits und rückgeführtem, aufgewärmtem Wasser andererseits ergibt. Die Rücküberführung von erwärmtem Wasser führt zu einem schnelleren Auftauen des sich im Wassertank befindlichen Eis, so dass im Zuge der erfindungsgemäßen Verfahrensdurchführung immer mehr Restwasser ausbildet, das zwecks Erwärmung in den Wasserbehälter überführt werden kann.

Dabei wird die erfindungsgemäße Verfahrensdurchführung vorzugsweise nicht nur während der sich nach einem Klarspülschritt anschließenden Trocknungsphase durchgeführt, sondern auch darüber hinaus, d.h. über das Ende eines Spülprogramms hinaus. Dies deshalb, weil selbst nach Beendigung eines Spülprogramms die vom Spülbehälter bevorratete Beladung als auch die Spülbehälterwandungen selbst noch warm sind, so dass auch nach Abschluss eines Spülprogramms noch ein effektiver Wärmeeintrag aus dem Spülbehälter auf das aufzuwärmende Wasser stattfinden kann.

Gemäß einem weiteren Merkmal der Erfindung ist vorgesehen, dass das Wasser im Wasserbehälter für eine vorgebbare Verweildauer verbleibt. Eine solche Verweildauer ist bevorzugterweise deshalb vorzusehen, um steuerungstechnisch sicherzustellen, dass das in den Wasserbehälter überführte Wasser eine Mindesttemperatur durch Erwärmen erreicht. Alternativ kann auch eine bloße Durchführung von Wasser durch den Wasserbehälter vorgesehen sein, in welchem Fall aber eine bevorzugterweise mäanderförmige Wasserdurchlaufroute durch den Wasserbehälter hindurch vorgesehen ist, um so einen optimierten Wärmeübertrag auf das Wasser zu erreichen.

Gemäß einer alternativen Ausgestaltung kann auch vorgesehen sein, dass das Wasser im Wasserbehälter bis zum Erreichen einer vorgebbaren Wassertemperatur verbleibt. In diesem Fall erfolgt also keine zeitgesteuerte Hindurchführung des Wassers durch den Wasserbehälter, sondern eine temperaturgesteuerte. Dabei kann die vorgebbare Wassertemperatur beispielsweise mit 10°C bis 20°C gewählt werden. Zur Erfassung der Temperatur ist der Wasserbehälter mit einer entsprechenden Sensorik ausgestattet oder es wird die von der Geschirrspülmaschine ohnehin schon vorgesehene Sensorik genutzt, beispielsweise die im Sammeltopf der Geschirrspülmaschine vorgesehene Sensorik. In diesem Fall ist zur Nutzung der geschirrspülmaschinenseitigen Sensorik das im Wasserbehälter befindliche Wasser zunächst in den Spülraum einzuleiten, wo dann eine sensorische Erfassung stattfinden kann. Optional ist gemäß einem Ausführungsbeispiel dabei auch möglich, dass das Wasser unter strömungstechnischer Zwischenschaltung des Spülbehälters in den Wassertank rücküberführt wird. Es findet in diesem Fall keine direkt Rücküberführung des Wassers aus dem Wasserbehälter in den Wassertank statt. Vielmehr ist vorgesehen, dass der Wasserbehälter in den Spülbehälter entleert wird, von wo aus dann das Wasser in den Wassertank geführt wird, so dass eine indirekte Wasserrückführung aus dem Wasserbehälter in den Wassertank gegeben ist. Eine solche indirekte Wasserrückführung kann aus dem schon vorstehend genannten Grund deshalb von Vorteil sein, damit eine Nutzung der geschirrspülmaschineseitigen Sensorik möglich ist. Alternativ kann mittels der geräteseitigen Sensorik auch ohne die Wasserzuführung aus dem Wasserbehälter die Temperaturabsenkung der Spülflotte gemessen werden, was einen Rückschluss auf die Erwärmung des im Wasserbehälter bevorrateten Wassers lässt.

Gemäß einem weiteren Merkmal der Erfindung ist vorgesehen, dass die Zuführung von Wasser aus dem Wassertank in den Wasserbehälter wiederholt durchgeführt wird. Es erfolgt mithin nicht nur eine einmalige Überführung von Wasser aus dem Wassertank in den Wasserbehälter und zurück in den Wassertank, sondern es ist vielmehr eine wiederholte Wasserüberführung vorgesehen, so dass ein möglichst großer Wärmeintrag in das Wasser stattfinden kann. Es können in diesem Zusammenhang Zyklen vorgesehen sein, wobei vorzugsweise eine vorgebbare Anzahl an Zyklen durchgeführt wird, bevor die erfindungsgemäße Verfahrensdurchführung beendet wird.

In diesem Zusammenhang wird gemäß einem weiteren Merkmal der Erfindung vorgeschlagen, dass nach Erreichen der vorgebbaren Anzahl an Zyklen das Wasser bis zum Beginn eines nachfolgenden Spülprogramms im Wasserbehälter verbleibt. Es wird so erreicht, dass das im Wasserbehälter befindliche Wasser durch die Umgebungsatmosphäre bis auf Raumtemperatur erwärmt werden kann. Für das nachfolgende Spülprogramm steht dann schon zumindest teilweise auf Raumtemperatur erwärmte Spülflotte zur Verfügung, so dass im nachfolgenden Spülprogramm weniger Energie für ein Aufheizen der Spülflotte benötigt wird.

Gemäß einem weiteren Merkmal der Erfindung ist vorgesehen, dass das Wasser in den Spülbehälter entleert wird. Von dort aus kann das Wasser entweder verworfen oder zurück in den Wassertank überführt werden. Der dann leere Wasserbehälter kann mit Frischwasser befüllt werden, das dann bis zu Beginn eines nächsten Spülprogramms auf Raumtemperatur anwärmen kann.

Gemäß einem weiteren Merkmal der Erfindung ist vorgesehen, dass die aus dem Spülbehälter stammende Spülflotte durch einen im Wasserbehälter angeordneten Wärmetauscher geführt wird. Hierdurch wird in vorteilhafter Weise ein zusätzlicher Wärmeübergang in das vom Wasserbehälter bevorratete Wasser erreicht, was die thermische Regeneration in vorteilhafter Weise beschleunigt.

Gemäß einem weiteren Merkmal der Erfindung ist vorgesehen, dass die Wassertemperatur im Wassertank sensiert wird. Dies ist insbesondere dann erwünscht, wenn eine temperaturgesteuerte Wasserführung aus dem Wassertank in den Wasserbehälter und umgekehrt erfolgen soll.

Alternativ oder zusätzlich ist vorgesehen, die Temperatur des sich im Wasserbehälter befindlichen Wasser zu sensieren.

Die Bestimmung der Wassertemperatur im Wassertank und/oder im Wasserbehälter kann durch einen im Wassertank und/oder im Wasserbehälter angeordneten Temperatursensor erfolgen.

Die Bestimmung der Wassertemperatur im Wassertank und/oder im Wasserbehälter kann aber auch gemäß einem weiteren Merkmal der Erfindung in vorteilhafter Weise mit einem in der Geschirrspülmaschine ohnehin schon vorgesehenen, insbesondere im Sammeltopf angeordneten Temperatursensor erfolgen. Dabei ist zwecks Sensierung des im Wasserbehälter und/oder im Wassertank befindlichen Wassers selbiges zunächst aus dem Wasserbehälter bzw. dem Wassertank in den Spülbehälter zu überführen. Dort vermischt sich die im Spülbehälter vorhandene Spülflotte mit dem eingelassenen Wasser und es stellt sich eine Mischtemperatur ein. Diese Mischtemperatur wird erfasst und mit der Temperatur der Spülflotte vor der Wassereinleitung verglichen. Aus der Temperaturdifferenz und der Menge an zugeführtem Wasser lässt sich die vorherige Temperatur des eingeleiteten Wassers mittels der geräteseitigen Steuerelektronik ermitteln.

Insbesondere nimmt Temperatursensor beispielsweise eine Messung eines Temperaturwerts vor, während Wasser entsprechend des erfindungsgemäßen Verfahrens aus dem Wassertank oder dem Wasserbehälter in den Spülbehälter bzw. den Sammeltopf einfließt oder unmittelbar nachdem eine erste Wassermenge entsprechend des erfindungsgemäßen Verfahrens aus dem Wassertank oder dem Wasserbehälter in den Spülbehälter bzw. den Sammeltopf eingeflossen ist. Dabei ist die erste Wassermenge vorzugsweise wesentlich kleiner als eine für den ersten Programmschritt eines Reinigungsprogramms bzw. den Programmschritt REINIGEN erforderliche Wassermenge, und/oder beträgt die erste Wassermenge vorzugsweise weniger als 1 Liter, insbesondere 300 bis 900 ml, besonders vorgezogen sind 500 bis 700 ml.

Vorzugsweise nimmt der Temperatursensor darüber hinaus zuvor bereits eine Messung eines Temperaturausgangswerts vor, nämlich unmittelbar bevor das Wasser entsprechend des erfindungsgemäßen Verfahrens aus dem Wassertank oder dem Wasserbehälter in den Spülbehälter bzw. den Sammeltopf einfließt.

Nach Messung des Temperaturausgangswerts und des Temperaturwerts vergleicht eine Steuereinrichtung des Reinigungsgeräts die festgestellte Temperaturabsenkung bzw. Temperaturdifferenz zwischen diesen Werten mit einem vorgegebenen oder vorgebbaren, in der Geräteelektronik hinterlegten ersten Grenzwert. Abhängig davon, ob die Temperaturdifferenz diesen ersten Grenzwert überschreitet oder nicht, wird das Reinigungsprogramm in unterschiedlicher Weise weitergeführt. Ist der erste Grenzwert nicht überschritten, wird die Wassereinleitung aus dem Wassertank oder dem Wasserbehälter in den Spülbehälter bzw. den Sammeltopf fortgesetzt, d.h. eine weitere Wassermenge aus dem Wassertank oder dem Wasserbehälter in den Spülbehälter bzw. den Sammeltopf geleitet. Ist der erste Grenzwert dagegen überschritten, wird in dem Reinigungsprogramm kein Wasser aus dem Wassertank oder dem Wasserbehälter in den Spülbehälter bzw. den Sammeltopf geleitet, sondern die restliche für das Reinigungsprogramm erforderliche Wassermenge aus der hausseitigen Frischwasserversorgung unter Umgehung des Wassertanks in den Reinigungsbehälter bzw. den Sammeltopf geleitet. Durch diese unterschiedliche Verfahrensführung kann verhindert werden, dass im Falle einer unzureichenden thermischen Regeneration des Wassertanks und des Wasserbehälters eine große Menge von sehr kaltem Wasser in den Spülbehälter eingelassen wird, was die Energieeffizienz des Verfahrens verschlechtern würde.

Alternativ oder zusätzlich kann die Steuereinrichtung nach Messung des Temperaturausgangswerts und des Temperaturwerts die festgestellte Temperaturabsenkung bzw. Temperaturdifferenz zwischen diesen Werten mit einem vorgegebenen oder vorgebbaren, in der Geräteelektronik hinterlegten zweiten Grenzwert vergleichen. Ist der zweite Grenzwert nicht überschritten, wird im nachfolgenden Programmschritt des Reinigungsprogramms die Wärmepumpeneinrichtung betrieben, um die Reinigungsflotte aufzuheizen. Ist der zweite Grenzwert dagegen überschritten, wird die Wärmepumpeneinrichtung in dem Reinigungsprogramm dagegen nicht betrieben. Stattdessen erfolgt in diesem Reinigungsprogramm die Aufheizung der Reinigungsflotte mit einer anderen Heizeinrichtung.

Der erste und zweite Grenzwert können identisch gewählt sein. In diesem Fall wird bei Überschreiten des Grenzwertes zum einen kein Wasser mehr aus dem Wassertank oder dem Wasserbehälter in den Spülbehälter bzw. den Sammeltopf geleitet, zum anderen die Wärmepumpeneinrichtung in dem Reinigungsprogramm nicht betrieben.

Alternativ ist der zweite Grenzwert höher als der erste Grenzwert. In diesem Fall gibt es nach Feststellung der Temperaturdifferenz und Vergleich mit den beiden Grenzwerten drei Verfahrensalternativen. Bei Unterschreiten des ersten Grenzwertes wird die Wassereinleitung aus dem Wassertank oder dem Wasserbehälter in den Spülbehälter bzw. den Sammeltopf fortgesetzt und im nachfolgenden Programmschritt des Reinigungsprogramms wird die Wärmepumpeneinrichtung betrieben, um die Reinigungsflotte aufzuheizen. Bei Überschreitung des ersten Grenzwertes nicht aber des zweiten Grenzwertes wird zwar kein Wasser mehr aus dem Wassertank oder dem Wasserbehälter in den Spülbehälter bzw. den Sammeltopf geleitet, im nachfolgenden Programmschritt des Reinigungsprogramms die Wärmepumpeneinrichtung jedoch betrieben, um die Reinigungsflotte aufzuheizen. Bei Überschreiten auch des zweiten Grenzwertes wird sowohl kein Wasser mehr aus dem Wassertank oder dem Wasserbehälter in den Spülbehälter bzw. den Sammeltopf geleitet, als auch die Wärmepumpeneinrichtung in dem Reinigungsprogramm nicht betrieben.

Insgesamt wird mit der erfindungsgemäßen Ausgestaltung sowohl vorrichtungsseitig als auch verfahrensseitig eine deutlich verkürzte Regenerationszeit hinsichtlich des als Wärmeträgermediums von der Wärmepumpeneinrichtung genutzten Wassers erreicht. Damit ist die Geschirrspülmaschine nach erfolgter Nutzung der Wärmepumpeneinrichtung schneller wieder einsetzbar, was verwenderseitig als vorteilhaft angesehen wird.

Weitere Merkmale und Vorteile der Erfindung ergeben sich aus der nachfolgenden Beschreibung anhand der Figuren. Dabei zeigen
- Fig. 1 bis 11: jeweils in schematischer Darstellung die erfindungsgemäße Geschirrspülmaschine in einer jeweiligen Ausführungsform und
- Fig. 12: in schematischer Darstellung eine Geschirrspülmaschine nach dem Stand der Technik.

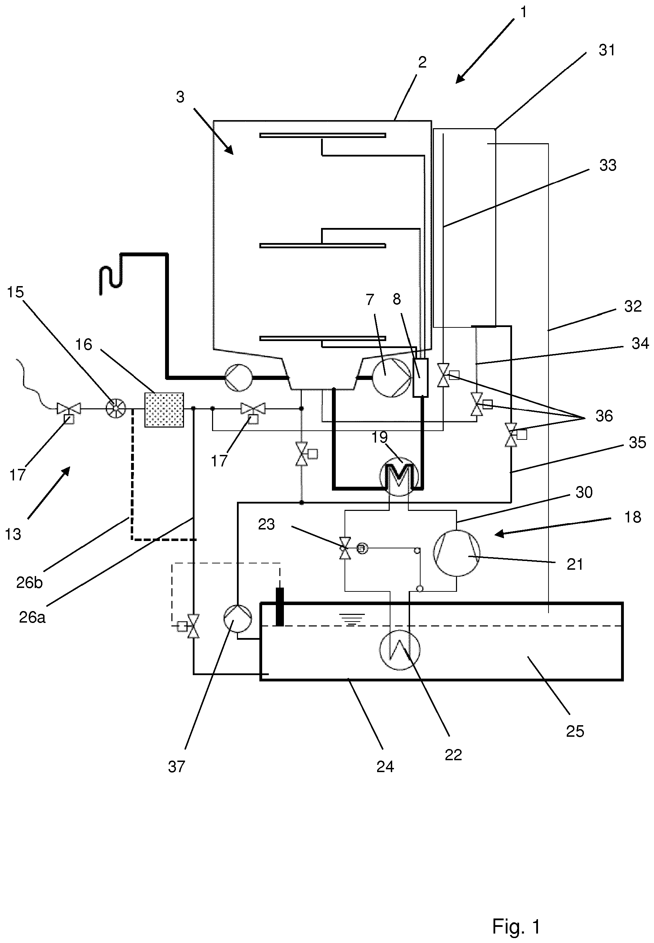

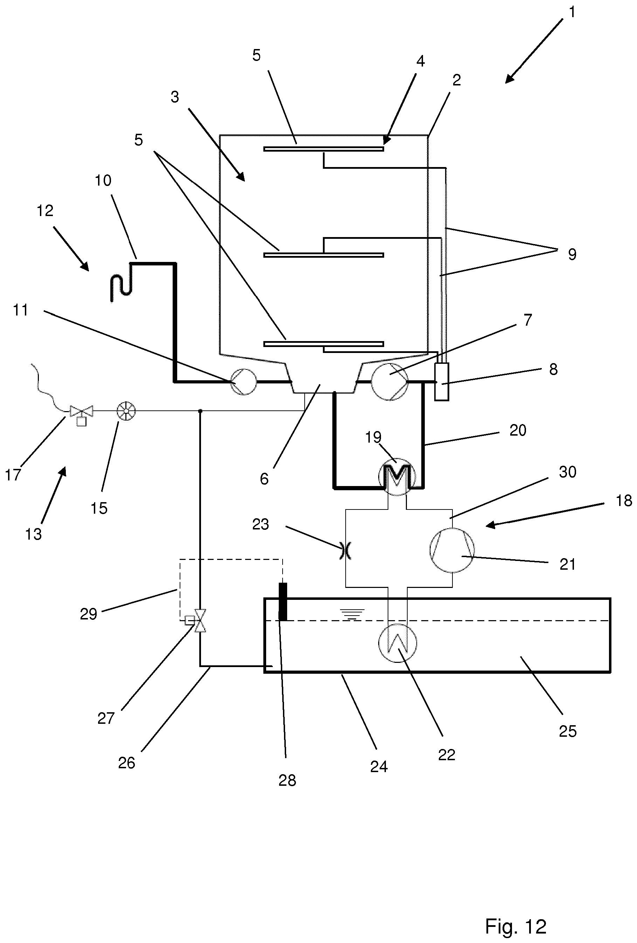

Fig. 12 lässt in schematischer Darstellung den prinzipiellen Aufbau einer Geschirrspülmaschine 1 nach dem Stand der Technik erkennen, wie er auch den erfindungsgemäßen Ausführungsformen gemäß der Figuren 1 bis 11 zugrundeliegt.

Die Geschirrspülmaschine 1 verfügt über ein in den Figuren nicht näher dargestelltes Gehäuse, das unter anderem einen Spülbehälter 2 aufnimmt. Der Spülbehälter 2 stellt seinerseits einen Spülraum 3 bereit, der im bestimmungsgemäßen Verwendungsfall der Aufnahme von zu reinigendem Spülgut dient, der sog. Beladung.

Zur Beschickung von zu reinigendem Spülgut mit Spülflotte dient eine Sprüheinrichtung 4, die innerhalb des Spülbehälters 2 angeordnet ist. Bevorzugterweise verfügt eine solche Sprüheinrichtung 4 über Sprüharme 5, die jeweils verdrehbar innerhalb des Spülbehälters 2 angeordnet sind.

Der Spülraum 3 mündet in einen im Detail nicht näher dargestellten Sammeltopf 6 des Spülbehälters 2 ein, an den eine Umwälzpumpe 7 strömungstechnisch angeschlossen ist. Über entsprechende Versorgungsleitungen 9 sind die Sprüharme 5 der Sprüheinrichtung 4 an die Umwälzpumpe 7 strömungstechnisch angeschlossen, und zwar unter Zwischenschaltung einer Wasserweiche 8. Im bestimmungsgemäßen Verwendungsfall kann damit eine Beschickung der Sprüheinrichtung 4 mit Spülflotte mittels der Umwälzpumpe 7 stattfinden, wobei Dank der Wasserweiche 8 eine Beschickung der Sprüharme 5 wahlweise stattfinden kann.

Die Geschirrspülmaschine 1 verfügt des Weiteren über einen Ablauf 12, über den gebrauchte und nicht mehr benötigte Spülflotte verworfen wird. Es ist zu diesem Zweck eine strömungstechnisch an den Sammeltopf 6 angeschlossene Ablaufleitung 10 vorgesehen, in die eine Ablaufpumpe 11 integriert ist. Sich im Sammeltopf 6 ansammelnde Spülflotte kann bei eingeschalteter Pumpe 11 über die Ablaufleitung 10 abgepumpt und damit verworfen werden.

Zwecks Zuführung von Frischwasser ist ein Frischwasseranschluss 13 vorgesehen. Dieser verfügt über eine an den Sammeltopf 6 strömungstechnisch angeschlossene Frischwasserleitung 14, in die ein Flügelradzähler 15 integriert ist. Entsprechende Ventile 17 ermöglichen ein fluiddichtes Verschließen der Frischwasserleitung 14.

Die Geschirrspülmaschine 1 verfügt des Weiteren über eine Wärmepumpeneinrichtung 18. Diese weist einen Verdichter 21, einen Verflüssiger 19, ein Expansionsorgan 23, einen Verdampfer 22 sowie einen diese Baukomponenten strömungstechnisch miteinander verbindenden Strömungskreislauf 30 auf, in dem ein Arbeitsmedium geführt ist.

Der Verdampfer 22 ist innerhalb eines Wassertanks 24 angeordnet, der mit Wasser 25 als Wärmeträgermedium befüllt ist.

Im bestimmungsgemäßen Verwendungsfall der Wärmepumpeneinrichtung 18 findet mit Hilfe des Verflüssigers 19 ein Wärmeübertrag von dem in Strömungskreislauf 30 der Wärmepumpeneinrichtung 18 geführten Arbeitsmedium auf die Spülflotte statt. Zu diesem Zweck ist ein an die Umwälzpumpe 7 strömungstechnisch angeschlossener Strömungskreislauf 20 für Spülflotte vorgesehen. Die im Betriebsfall im Verflüssiger 19 durch Verflüssigung des Arbeitsmediums frei werdende Wärmeenergie wird mithin auf die im Strömungskreislauf 20 umgewälzte Spülflotte übertragen.

Gemäß der gezeigten Ausführungsform ist der Wassertank 24 als offener Wassertank ausgebildet und über eine Leitung 26 an die Frischwasserleitung 14 strömungstechnisch angeschlossen, was es im Bedarfsfall gestattet, den Wassertank 24 mit Frischwasser zu befüllen. Zur Einstellung eines vorgebbaren Wasserpegels innerhalb des Wassertanks 24 ist ein Füllstandssensor 28 vorgesehen, der in kommunikationstechnischer Verbindung 29 mit einem in die Leitung 26 integrierten Ventil 27 steht.

Ausgehend von der vorerläuterten bekannten Konstruktion verfügt die erfindungsgemäße Geschirrspülmaschine 1 in Entsprechung der Fign. 1 bis 11 über einen dem Spülbehälter 2 nebengeordneten Wasserbehälter 31, der in strömungstechnischer Verbindung mit dem Wassertank 24 der Wärmepumpeneinrichtung 18 steht. Demgemäß verfügt die erfindungsgemäße Geschirrspülmaschine 1 mithin über zwei Wasserbehältnisse, nämlich über den Wassertank 24 einerseits sowie den Wasserbehälter 31 andererseits. Beide Behältnisse sind voneinander separiert ausgebildet, wobei sich der Wassertank 24 im Sockelbereich der Geschirrspülmaschine 1 unterhalb des Spülbehälters 2 befindet, wohingegen der Wasserbehälter 31 dem Spülbehälter 2 nebengeordnet ist und bevorzugterweise außenseitig einer seitlichen Wandung des Spülbehälters 2 angeordnet ist. Dabei ist der Spülbehälter 31 mit dem Spülbehälter 2 vorzugsweise thermisch gekoppelt, wobei der Wassertank 24 vom Spülbehälter 2 vorzugsweise thermisch entkoppelt ist. Zwecks strömungstechnischer Verbindung von Wassertank 24 und Wasserbehälter 31 sind je nach Ausführungsform entsprechende Verschlauchungen und/oder Verleitungen vorgesehen, typischerweise ohne strömungstechnische Zwischenschaltung des Spülbehälters 2 (optional aber auch mit strömungstechnischer Zwischenschaltung des Spülbehälters 2), wie sich dies anhand der unterschiedlichen Ausführungsformen gemäß der Fign. 1 bis 11 im Einzelnen ergibt.

Gemäß der Ausführungsform nach Fig. 1 ist der Wasserbehälter 31 mittels der Leitung 33 strömungstechnisch an die Frischwasserleitung 14, mittels der Leitung 34 strömungstechnisch an den Sammeltopf 6 und mittels der Leitung 35 strömungstechnisch an den Wassertank 24 angeschlossen, und zwar unter jeweiliger Zwischenschaltung eines Ventils 36, so dass ein wahlweises Sperren der jeweiligen Leitung gestattet ist. In die Leitung 35 ist ferner eine Pumpe 37 integriert, so dass ein gepumptes Abführen von Wasser 25 aus dem Wassertank 24 in den Wasserbehälter 31 gestattet ist. Des Weiteren ist eine Überlaufleitung 32 vorgesehen, die einen Überlauf von Wasser aus dem Wasserbehälter 31 in den Wassertank 24 gestattet.

Gemäß dieser Konstruktion kann der Wasserbehälter 31 wahlweise mit Frischwasser aus der Frischwasserleitung 14 oder mit Wasser aus dem Wassertank 24 befüllt werden. Ferner kann der Wasserbehälter 31 wahlweise in den Spülraum 3 oder in den Wassertank 24 entleert werden.

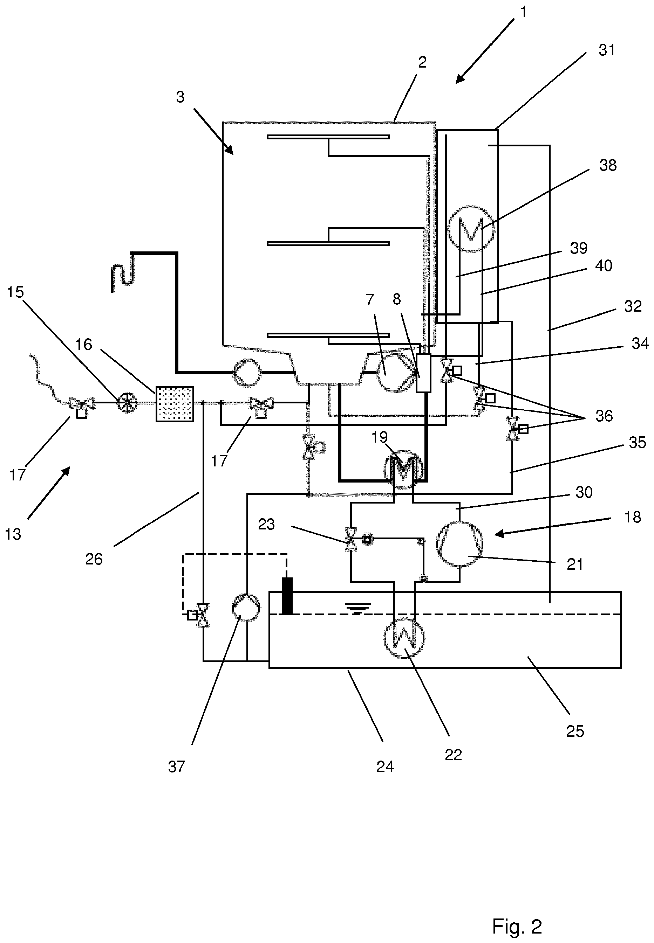

Der Frischwassereinlauf kann wahlweise direkt in den Spülraum 3, in den Wassertank 24 oder in den Wasserbehälter 31 erfolgen. Der Frischwassereinlauf weist einen Wasserenthärter 16 auf, dessen Anordnung eine Einleitung von enthärtetem Wasser, also Weichwasser, sowohl in den Spülraum 3, in den Wassertank 24 und auch in den Wasserbehälter 31 ermöglicht. Alternativ kann der Wasserenthärter 16 aber auch in Einlaufrichtung nicht vor, sondern hinter dem Abzweig der zum Wassertank 24 führenden Leitung 26a bzw. 26b angeordnet sein, wie durch die gestrichelte Ausführung der Leitung 26b angedeutet, so dass in den Wassertank 24 unmittelbar vom Frischwasseranschluss 13 lediglich Hartwasser zugeführt wird. Dies gilt für das Ausführungsbeispiel von Fig. 1, kann aber analog auch für die übrigen Ausführungsbeispiele der Figuren 2 bis 11 auf diese Weise ausgeführt sein.

Hinsichtlich des Wassertanks 24 kann wahlweise eine Entleerung in den Spülraum 3 oder in den Wasserbehälter 31 stattfinden. Dabei dient zur Entleerung des Wassertanks 24 die separat vorgesehene Pumpe 37.

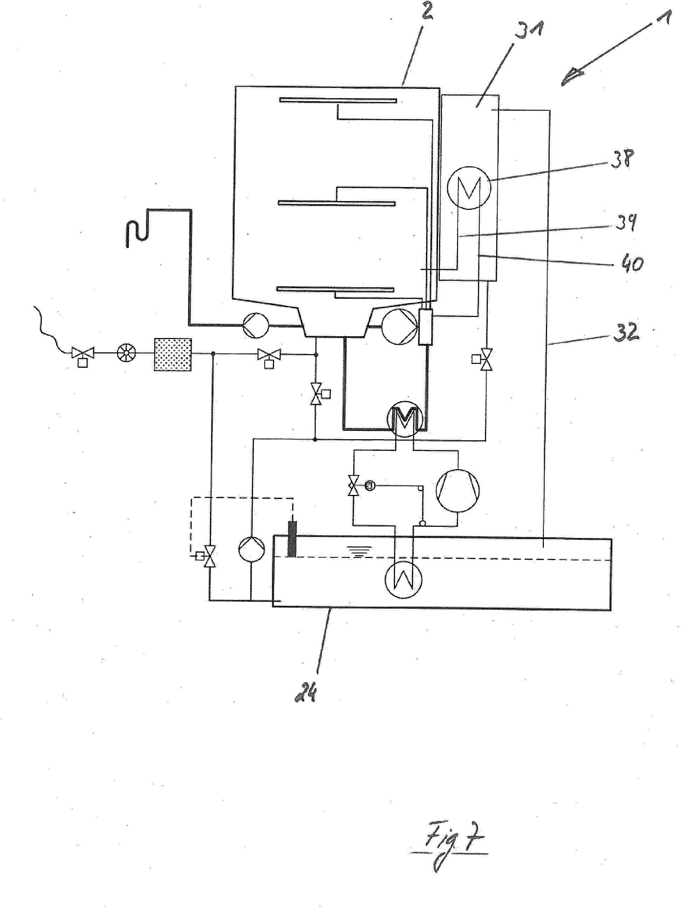

Gemäß der Ausführungsform nach Fig. 2 ist in weiterer Ergänzung zur Ausführungsform nach Fig. 1 ein Wärmetauscher 38 vorgesehen, der innerhalb des Wasserbehälters 31 angeordnet ist. Mittels der Leitungen 39 und 40 ist der Wärmetauscher 38 eingangsseitig wie ausgangsseitig an den Spülbehälter 2 strömungstechnisch angeschlossen. Im bestimmungsgemäßen Verwendungsfall kann mithin dem Spülbehälter noch warme Spülflotte entnommen und durch den Wärmetauscher 38 geführt werden, wobei sich der Wärmetauscher 38 zurück in den Spülraum 3 entleert. Für diesen Kreislauf kann wie hier gezeigt die Umwälzpumpe 7, welche auch zur Versorgung der Sprüheinrichtungen dient, eingesetzt werden, oder aber in einer hier nicht gezeigten alternativen Ausführungsform eine zusätzliche Pumpe. Letzteres gilt ebenso für die Ausführungsbeispiele der Figuren 7, 9 und 11

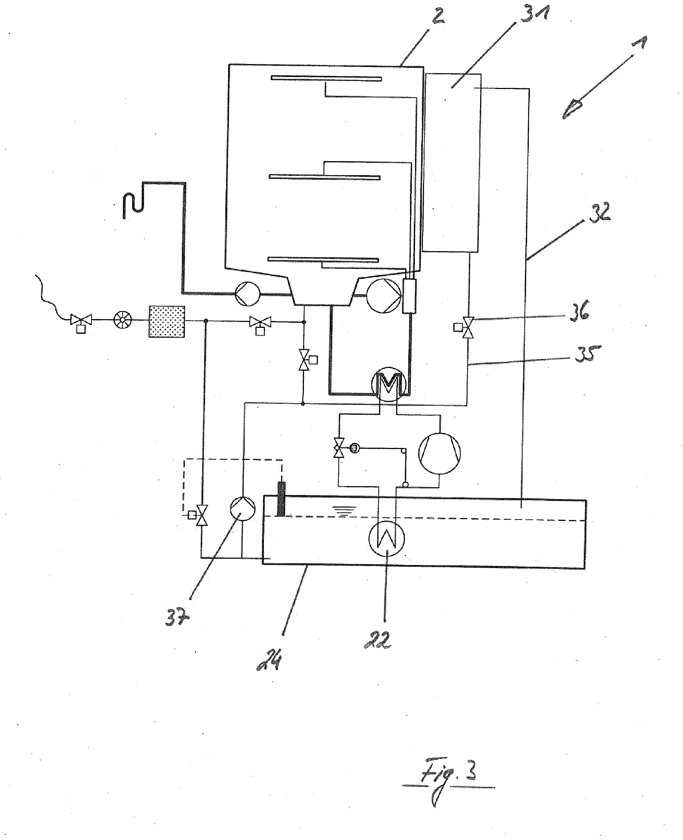

Die Ausführungsform nach Fig. 3 sieht allein die Leitung 35 zur strömungstechnischen Verbindung von Wassertank 24 und Wasserbehälter 31 vor. Demnach kann der Wasserbehälter 31 ausschließlich mit Wasser 25 aus dem Wassertank 24 befüllt werden. Auch eine Entleerung des Wasserbehälters 31 ist ausschließlich in den Wassertank 24 möglich. Der Wassereinlauf kann indes wahlweise direkt in den Spülraum 3 oder den in Wassertank 24 erfolgen.

Der Wassertank 24 kann wahlweise entweder in den Spülraum 3 oder in den Wasserbehälter 31 entleert werden.

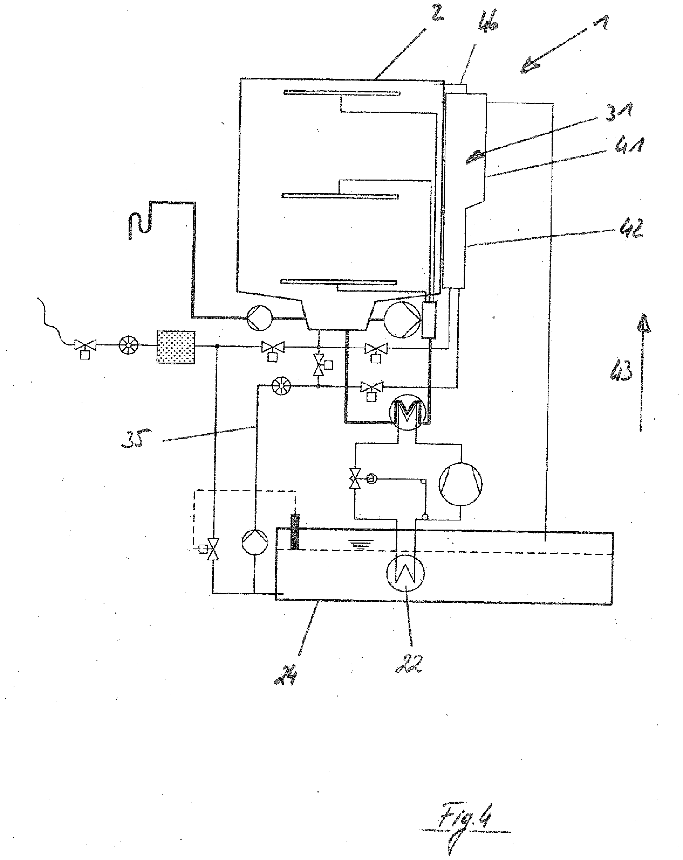

Die Ausführungsform nach Fig. 4 entspricht prinzipiell derjenigen nach Fig. 3. Von besonderer Ausgestaltung ist der Wasserbehälter 31, der in Höhenrichtung 43 über zwei übereinander angeordnete Abschnitte verfügt, nämlich einen ersten Abschnitt 41 und einen zweiten Abschnitt 42. Dabei ist der zweite Abschnitt 42 in Dickenrichtung dünner als der erste Abschnitt 41 ausgebildet. Der Spülbehälter 31 ist mithin im unteren Bereich des zweiten Abschnitts 42 in der Dicke reduziert ausgebildet. Durch diese Besonderheit wird erreicht, dass sich zu Beginn der Wärmerückgewinnung geringe Mengen des Eiswassers aus dem Wassertank 24 auf eine größere Fläche, das heißt Kontaktfläche zum Spülbehälter 2 verteilt. Im oberen Bereich, das heißt im Bereich des ersten Abschnitts 41 ist der Wasserbehälter 31 auf die vom Bauraum der Geschirrspülmaschine 1 vorgegebene maximale Breite vergrößert.

Im Unterschied zur Ausführungsform nach Fig. 3 kann der Wasserbehälter 31 wahlweise in den Wassertank 24 oder den Spülraum 3 entleert werden. Ferner ist ein Flügelradzähler zwischen der Befüllpumpe 37 und dem Wasserbehälter 31 vorgesehen, wobei auch ein anderer Durchflussmengenmesser als ein Flügelradzähler vorgesehen sein kann.

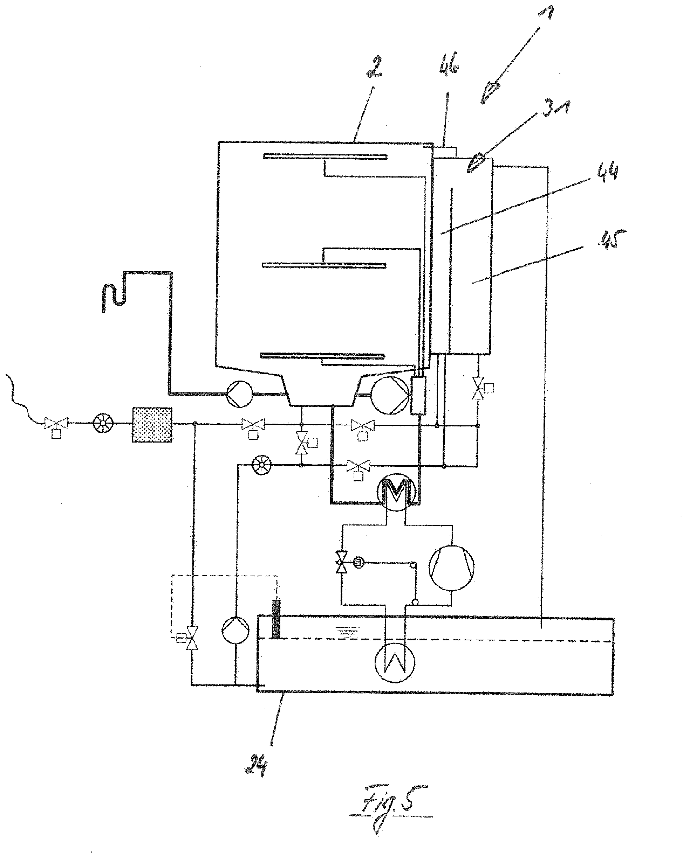

Eine zur Ausgestaltung nach Fig. 4 alternative Ausgestaltung zeigt Fig. 5. Um eine möglichst große Kontaktfläche bei einer nur geringen Menge an in den Wasserbehälter 31 überführtem Wasser zwischen dem Spülbehälter 2 und dem Wasser zu schaffen, weist der Wasserbehälter 31 zwei unterschiedlich groß ausgebildete Kammern auf, nämlich eine erste Kammer 44 und eine zweite Kammer 45. Dabei ist die erste Kammer 44 vergleichsweise dünn in Dickenrichtung ausgebildet und liegt am Spülbehälter 2 an. Im bestimmungsgemäßen Verwendungsfall erfolgt vorzugsweise eine Befüllung erst der ersten Kammer 44 mit Wasser, so dass ein möglichst optimierter Wärmeübergang erreicht ist. Fällt im Zuge eines Auftauens des Wassertanks 24 eine größere Menge an Wasser an, so erfolgt nicht nur eine Befüllung der ersten Kammer 44, sondern auch eine Befüllung der zweiten Kammer 45. Die Zwei-Kammer-Ausgestaltung nach Fig. 5 hat im Unterschied zur Ausgestaltung nach Fig. 4 den Vorteil, dass der gesamte zur Verfügung stehende Bauraum der Geschirrspülmaschine zur Ausbildung des Wasserbehälters 31 genutzt werden kann.

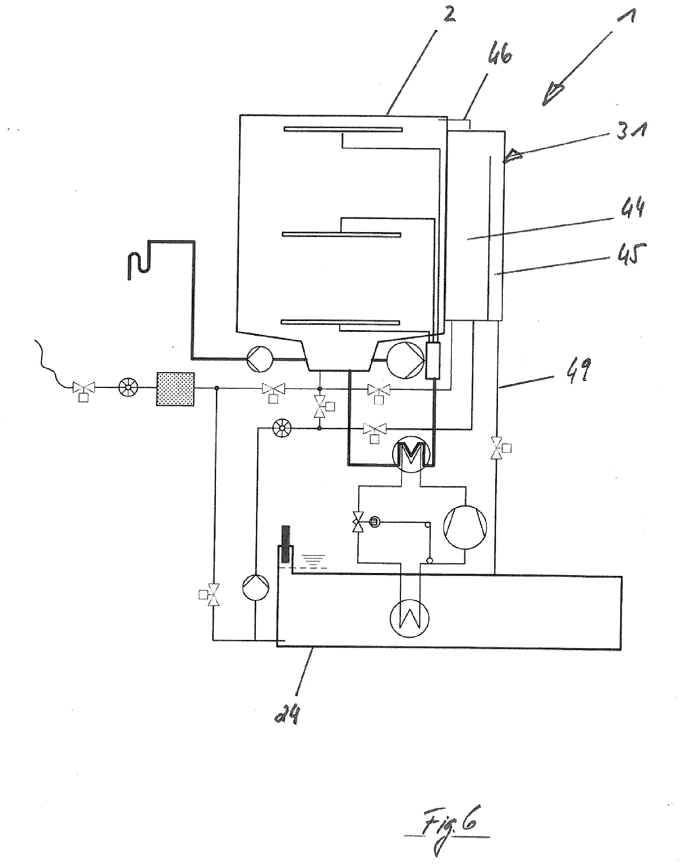

Fig. 6 zeigt eine weitere Alternative, dergemäß zwar auch zwei Kammern 44 und 45 vorgesehen sind, bei diesem Fall jedoch die mit Bezug auf die Zeichnungsebene nach Fig. 6 rechte Kammer 45 als Ausgleichs- bzw. Ausdehnungsbehälter dient. Dabei ist die Kammer 45 mittels der Leitung 49 an den Wassertank 24 strömungstechnisch angeschlossen.

Die Kammer 45 dient im gezeigten Ausführungsbeispiel dem Wassertank 24 als Ausdehnungsbehälter. Dies ermöglicht es, die Füllmenge im Wassertank 24 zu maximieren. Im Einfrierfall durch entstehendes Eis verdrängtes Wasser kann über die Leitung 49 in die zweite Kammer 45 aufsteigen, womit ein Bersten des Wassertanks 24 durch sich ausdehnendes Eis ausgeschlossen ist. Dabei ist die Kammer 45 unter Zwischenschaltung der ersten Kammer 44 benachbart zum Spülbehälter 2 angeordnet. Das in die zweite Kammer 45 aufgestiegene Wasser kann sich bereits während eines Spülprogramms anwärmen. Dabei dient die zu diesem Zeitpunkt des Spülprogramms noch leere erste Kammer 44 als Isolator zum Spülbehälter 2, so dass während der Durchführung eines bestimmungsgemäßen Spülprogramms nicht ungewollt Wärmeenergie aus dem Spülbehälter 2 abgezogen wird.

Den Ausführungsformen nach den Fign. 4 bis 6 ist im Übrigen eine zweite Überlaufleitung/Entlüftung 46 gemein, die eine strömungstechnische Verbindung zwischen dem Wasserbehälter 31 und dem Spülbehälter 2 ausbildet.

Die Ausführungsform nach Fig. 7 entspricht prinzipiell derjenigen nach Fig. 3. Ergänzend ist eine Wärmetauscher 38 vorgesehen, der innerhalb des Wasserbehälters 31 angeordnet ist. Über die Leitungen 39 und 40 ist der Wärmetauscher 38 strömungstechnisch an den Spülraum 2 angeschlossen, wobei hinsichtlich der Leitung 40 eine Zwischenschaltung der Wasserweiche 8 vorgesehen ist und eine Verwendung der Umwälzpumpe 7, welche auch zur Versorgung der Sprüheinrichtungen dient. Es ist aber auch möglich, dass für den Strömungskreislauf über die Leitungen 39 und 40 und den Wärmetauscher 38 gemäß einer hier nicht gezeigten alternativen Ausführungsform eine zusätzliche Pumpe (ohne Zwischenschaltung der Wasserweiche 8) eingesetzt wird.

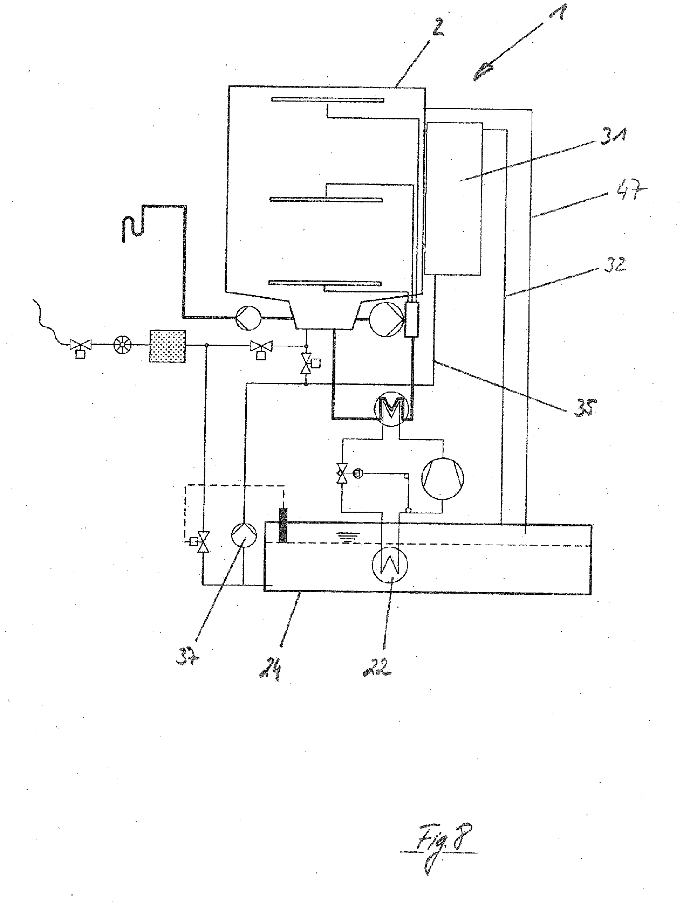

Gemäß der Ausführungsform nach Fig. 8 ist eine weitere Leitung 47 vorgesehen, die eine direkte strömungstechnische Verbindung zwischen Spülbehälter 2 und Wassertank 24 ausbildet. Ferner sind eine Überlaufleitung 32 und eine Leitung 35 zur strömungstechnischen Verbindung von Wasserbehälter 31 und Wassertank 24 vorgesehen.

Der Wasserbehälter 31 kann ausschließlich mit Wasser 25 aus dem Wassertank 24 befüllt werden. Zur Beschleunigung des Wärmetausches wird der Wasserbehälter 31 im Durchlauf durchströmt. Eine Entleerung des Wasserbehälters 31 ist ausschließlich in den Wassertank 24 möglich. Der Frischwassereinlauf kann wahlweise direkt in den Spülraum 3 oder den Wassertank 24 erfolgen. Eine Entleerung des Wassertanks 24 kann wahlweise in den Spülraum 3 oder in den Wasserbehälter 31 erfolgen.

Durch das Durchströmen des Wasserbehälters 31 im Durchlauf kann bei dieser Ausführungsform eine für die Dauer des Wärmetausches gleichbleibend niedrige Temperatur im Wasserbehälter 31 und damit ein gleichbleibend hoher Temperaturgradient zum Spülraum 3 gewährleistet werden. Darüber hinaus kann der Wärmetausch verkürzt werden.

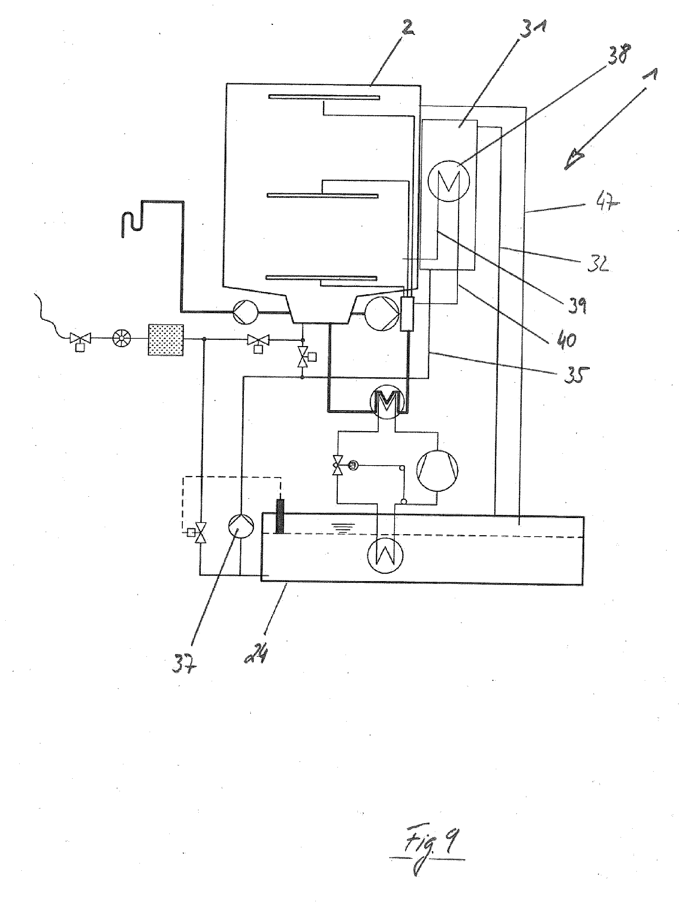

Die Ausführungsform nach Fig. 9 entspricht prinzipiell derjenigen nach Fig. 8, wobei ein zusätzlicher Wärmetauscher 38 vorgesehen ist, der innerhalb des Wasserbehälters 31 angeordnet ist, analog zu den Ausführungsbeispielen der Figuren 2 und 7.

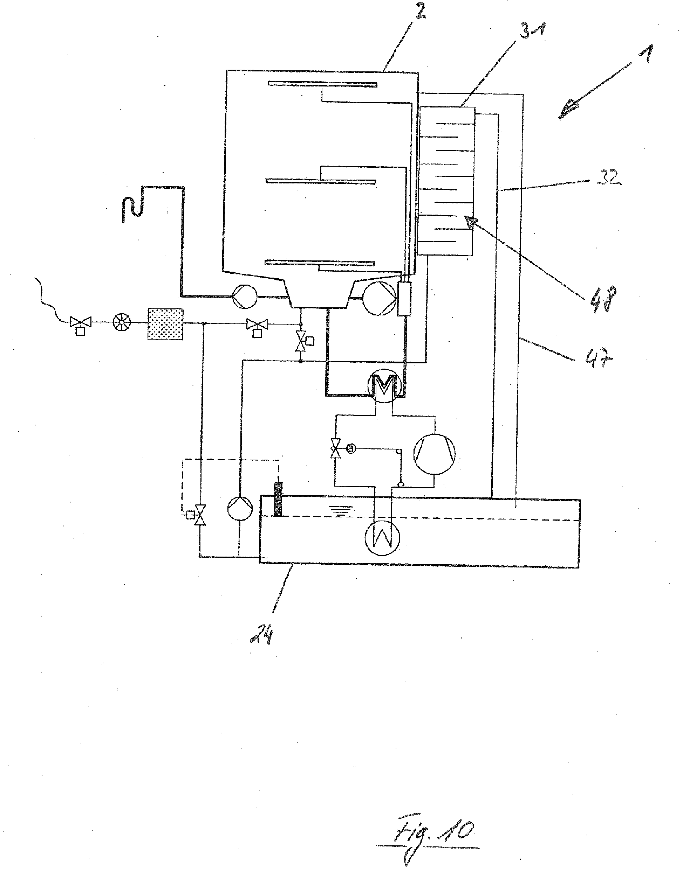

Gemäß der Ausführungsform nach Fig. 10 ist die Ausführungsform von Figur 8 dadurch weitergebildet, dass der als Durchlaufbehälter ausgebildete Wasserbehälter 31 eine Mäanderführung 48 bereitstellt. Dies führt in vorteilhafter Weise zu einem verbesserten Wärmetausch und gewährleistet, dass am Ausgang des Wasserbehälters 31 stets die höchste Temperatur im Wasserbehälter 31 vorliegt, und somit das von dort in den Wassertank 24 überführte Wasser die größtmögliche Temperatur aufweist.

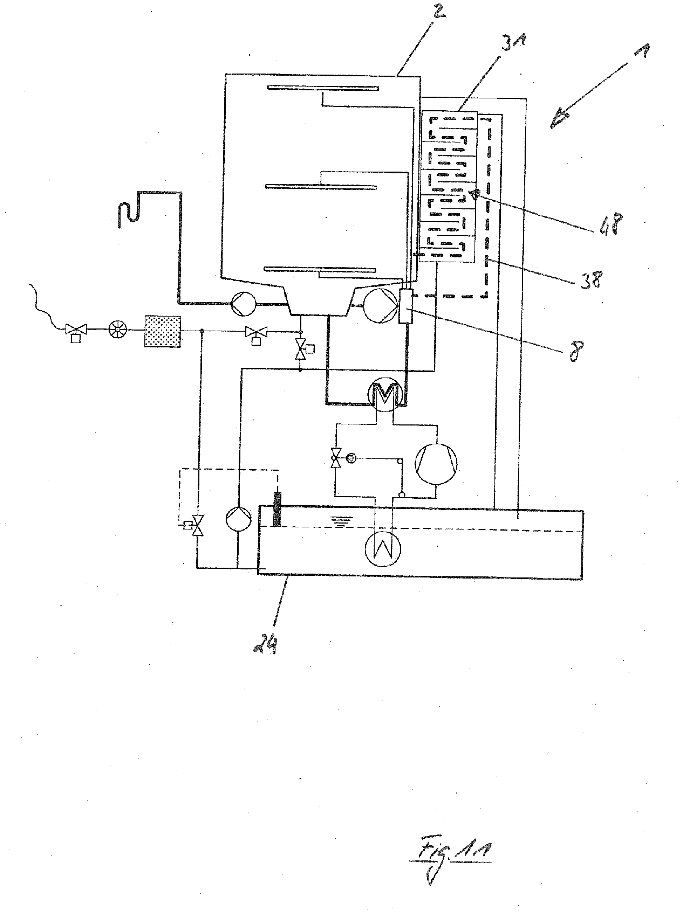

Die Ausführungsform nach Fig. 11 entspricht grundsätzlich ebenfalls derjenigen nach Fig. 8, wobei zusätzlich zu einer Mäanderführung 48 ein entsprechend mäanderförmig verlaufender Wärmetauscher 38 vorgesehen ist, welcher in analoger Weise wie im Ausführungsbeispiel von Fig. 7 eingangs- und ausgangsseitig strömungstechnisch an den Spülraum 2 angeschlossen ist. Dieser Wärmetauscher ist vorzugsweise wie hier gezeigt innenliegend des Wasserbehälters 31, also der Mäanderführung 48 des Wasserbehälters 31und somit in koaxialer Weise angeordnet und wird vorzugsweise im Gegenstrom betrieben. Hierdurch wird ein besonders effizienter Wärmetausch erreicht.

Bei den gezeigten Ausführungsbeispielen der Figuren 1 bis 11 kann der Wasserbehälter 31 auf seiner dem Spülbehälter 2 abgewandten Seite, also auf seiner dem Gehäuse der Geschirrspülmaschine 1 zugewandten Seite, mit einer Dämmschicht versehen sein, wodurch wird eine etwaige außenseitige Betauung verhindert wird.

Die in den Figuren 1 bis 11 gezeigten besonderen Merkmale der Ausführungsbeispiele können im Übrigen auch miteinander kombiniert werden.

Das erfindungsgemäße Verfahren zur Wärmerückgewinnung geht bezüglich der vorbeschriebenen Konstruktionen anhand der Figuren 1 bis 11 wie folgt vonstatten:
Bevorzugterweise kurz vor Ende des Programmschrittes Reinigen und/oder Zwischenspülen und/oder Klarspülen wird das nicht eingefrorene Eiswasser 25 aus dem Wassertank 24 in den separaten Wasserbehälter 31 gepumpt. Das Eiswasser wird in diesem Fall durch die Restwärme im Spülraum, das heißt insbesondere der Beladung und der Spülflotte erwärmt.

Die Spülflotte wird durch die Sprüharme 5 auf die Spülraumwände innenseitig gesprüht. Während des Ablaufens in den Sammeltopf 6 wird die Spülflotte durch das Eiswasser im seitlichen Spülbehälter 31 abgekühlt. Durch den hohen Temperaturgradienten erfolgt ein Wärmeaustausch mit hoher Geschwindigkeit. Da das Spülprogramm weiterläuft, wird die abgekühlte Spülflotte durch die Beladung wieder erwärmt.

Wird im Spülbehälter 31 eine in der Geräteelektronik hinterlegte Temperatur von zum Beispiel 10°C bis 20°C erreicht und/oder eine in der Geräteelektronik hinterlegte Temperatur im Sammeltopf 6 unterschritten und/oder eine in der Geräteelektronik fest hinterlegte Zeitrampe überschritten, wird der Wasserbehälter 31 in den Wassertank 24 entleert.

Das im Wasserbehälter 31 erwärmte Wasser taut das Eis im Wassertank 24 ganz oder teilweise auf, abhängig von der Zykluszahl, der Eismenge im Wassertank 24 und der Beladung, das heißt der zur Verfügung gestellten Wärmekapazität.

In den dargestellten Ausführungsbeispielen wird die Temperatur im Wasserbehälter 31 nicht sensiert. Alternativ hierzu kann der Wasserbehälter 31 auch mit einem oder mehreren Temperatursensoren ausgestattet sein.

Da die Temperatur im Wassertank 24 erst nach dem vollständigen Auftauen wieder ansteigt, wird nach einer in der Steuerung hinterlegten Wartezeit der Füll- und Entleerungsvorgang so häufig wiederholt, bis ein im Sammeltopf befindlicher Temperatursensor eine vorgegebene Spülraumtemperatur sensiert.

Alternativ kann auch eine feste Anzahl an Regenerationszyklen in der Gerätesteuerung hinterlegt werden. Diese Anzahl kann in Abhängigkeit von der Spülraumtemperatur bei Programmstart variiert werden.

Mit fallender Umgebungstemperatur ist davon auszugehen, dass sich die passive Regenerationszeit nach Programmende aufgrund des geringeren Temperaturgradienten zwischen Aufstellraum und Wassertank 24 deutlich verlängert. Um trotzdem eine akzeptable Auftauzeit zu gewährleisten, kann im Klarspülen die Temperatur erhöht werden und zusätzlich die Haltezeit verkürzt werden.

Der Regenerationsschritt kann wahlweise nach jedem Programmschritt durchgeführt werden. Besonders sinnvoll ist die Wärmerückgewinnung jedoch erst zum Programmende, vor und/oder während des Trocknungsschrittes. Die Wärmerückgewinnung kann während der Trocknung auch nach dem Abpumpen der Spülflotte fortgesetzt werden. Durch die dauerhaft niedrige Eiswassertemperatur im seitlichen Wasserbehälter 31 während der Wärmerückgewinnung von ca. 0°C bis 10°C kann der Prozess auch bei Erreichen der Umgebungstemperatur im Spülraum fortgeführt werden.

Um die Wärmerückgewinnung noch weiter zu beschleunigen, kann das erfindungsgemäße Verfahren auch über das Spülprogrammende hinaus, insbesondere bei aktivierter Türöffnung fortgesetzt werden. Bei einer solchen Verlängerung der Verfahrensdurchführung wird das Eiswasser direkt über die Spülraumseitenwand durch die Umgebung erwärmt. Dabei kann vergleichsweise warme Umgebungsluft in den Spülraum 3 aufgrund der automatisch geöffneten Spülraumtür nachströmen. Besonders vorteilhaft bei dieser Methode ist, dass eventuell anfallendes Kondensat aus der Raumluft an der Spülrauminnenseite kondensiert und in den Sammeltopf 6 abläuft. Das Kondensat wird bei Start des nächsten Programms abgepumpt. Ein weiterer Vorteil ist, dass bei einer verlängerten Wärmerückgewinnung über die Umgebung das Verfahren auch ohne Beladung, das heißt ohne sich im Spülbehälter befindliches Spülgut möglich ist.

Hinsichtlich der einzelnen Ausführungsformen nach den Figuren 1 bis 11 ergeben sich verfahrenstechnisch folgende Besonderheiten.

Gemäß den Ausführungsformen nach den Figuren 1 und 2 kann der Wasserbehälter 31 auch mit kalten Frischwasser gefüllt werden, das eine Temperatur von zirka 12°C bis 18°C aufweist. Diese Füllung kann kurz vor Ende des Programmschritts "Reinigen" und/oder "Zwischenspülen" erfolgen. Eine erneute Füllung nach Abschluss des gesamten Spülprogramms findet indes erst nach einer aktiven, insbesondere hinreichenden Regeneration des Wassertanks 24 statt.

Gemäß der Ausführungsformen nach den Figuren 1, 2 und 4 bis 6 kann der Wasserbehälter 31 auch direkt in den Spülraum 3 entleert werden. Hierdurch ist es möglich, die letzte Füllung aus dem Wassertank 24 zum Programmende im seitlichen Wasserbehälter 31 zu belassen und den Wassertank 24 am Spülprogrammende mit Frischwasser aufzufüllen. Durch diese Maßnahme stehen zur thermischen Regeneration des Wassertanks 24 bei einer Wassermenge von zum Beispiel 2,5 I Frischwasser mit 15°C weitere 43,5Whzur Verfügung. Weiterhin kann hierdurch der Energieverbrauch für die aktive Wärmerückgewinnung und damit der Gesamtenergieverbrauch der Geschirrspülmaschine 1 weiter reduziert werden. Darüber hinaus wird durch das besonders günstige Oberflächenverhältnis und der Möglichkeit, auch die Restwärme aus dem Spülraum 3 vollständig ausnutzen zu können, erreicht, dass die beispielsweise 2,5 I Frischwasser mit zirka 0°C bis 0,5°C im seitlichen Wasserbehälter 31 innerhalb kürzester Zeit wieder Raumtemperatur erreichen.

Die Ausführungsformen nach den Figuren 4 und 5 stellen einen zweistufigen Wasserbehälter 31 zur Verfügung. Dies gestattet es, zu Beginn der Wärmerückgewinnung den Wasserbehälter 31 mit einer nur geringen Menge an Eiswasser zu befüllen, beispielsweise in einer Menge von 0,5 I bis 1,5 I. Durch diese besondere Bauform wird erreicht, dass sich die zu Beginn der Wärmerückgewinnung geringe Menge an Eiswasser aus dem Wassertank 24 auf eine deutliche größere Fläche verteilt und somit der Erwärmungsgeschwindigkeit und damit auch die Regenerationszeit verkürzt wird.

Die Ausführungsform nach Fig. 4 beinhaltet zudem die Besonderheit des Flügelradzählers in der Leitung 35. Der Flügelradzähler ermöglicht eine exakte Ermittlung der in den Wasserbehälter 31 geförderten Wassermenge. Dies erlaubt es, den Vereisungsgrad des Wassertanks 24 anhand der absolut geförderten Wassermenge bestimmen zu können. Da nach jedem Regenerationszyklus die Menge an Eiswasser zunimmt, kann der Regenerationsfortschritt anhand der geförderten Wassermenge überwacht werden. Ferner ist es möglich, zu detektieren, ob die maximale Füllmenge im Wassertank 24 überschritten wird, so dass die Füllstandshöhe durch Abpumpen zu begrenzen ist. Darüber hinaus kann die in den Spülraum 3 geförderte Wassermenge mittels des Flügelradzählers überwacht und/oder begrenzt werden.

Gemäß den Ausführungsformen nach den Figuren 2, 7, 9 und 11 ist ein innerhalb des Wasserbehälters 31 angeordneter Wärmetauscher 38 vorgesehen. Dieser gestattet eine zusätzliche Abkühlung der Spülflotte, ohne Wärme aus der Beladung zu ziehen. Ist der seitliche Wasserbehälter 31 mit Eiswasser aus dem Wassertank 24 zur thermischen Regeneration gefüllt, so kann die Spülflotte zur direkten Wärmeübertragung durch den Wärmetauscher 28 gepumpt werden.

Gemäß der Ausführungsformen nach den Figuren 8 bis 11 wird der Wasserbehälter 31 als Durchlaufwärmetauscher betrieben. Durch diese Ausführungsform kann eine für die Dauer des Wärmetauschers gleichbleibend niedrige Temperatur im Wasserbehälter 31 und damit ein gleichbleibend hoher Temperaturgradient zum Spülraum 3 gewährleistet werden. Durch diese besondere Ausführung entfällt das mehrfache Befüllen und Entleeren. Darüber hinaus kann der Wärmetausch durch den Entfall der Wartezeiten verkürzt werden.

### Bezugszeichenliste

- 1: Geschirrspülmaschine
- 2: Spülbehälter
- 3: Spülraum
- 4: Sprüheinrichtung
- 5: Sprüharm
- 6: Sammeltopf
- 7: Umwälzpumpe
- 8: Wasserweiche
- 9: Leitung
- 10: Ablaufleitung
- 11: Pumpe
- 12: Ablauf
- 13: Frischwasseranschluss
- 14: Frischwasserleitung
- 15: Flügelradzähler
- 16: Enthärter
- 17: Ventil
- 18: Wärmepumpeneinrichtung
- 19: Verflüssiger
- 20: Strömungskreislauf
- 21: Verdichter
- 22: Verdampfer
- 23: Drossel
- 24: Wassertank
- 25: Wasser
- 26, 26a, 26b: Leitung
- 27: Ventil
- 28: Füllstandssensor
- 29: kommunikationstechnische Verbindung
- 30: Strömungskreislauf
- 31: Wasserbehälter
- 32: Überlaufleitung/Entlüftung
- 33: Leitung
- 34: Leitung
- 35: Leitung
- 36: Ventil
- 37: Pumpe
- 38: Wärmetauscher
- 39: Leitung
- 40: Leitung
- 41: erster Abschnitt
- 42: zweiter Abschnitt
- 43: Höhenrichtung
- 44: erste Kammer
- 45: zweite Kammer
- 46: Überlaufleitung
- 47: Leitung
- 48: Mäanderführung
- 49: Leitung

## Patentansprüche

1. Verfahren zum Betrieb einer Geschirrspülmaschine, insbesondere einer Haushaltsgeschirrspülmaschine, welche einen einen Spülraum (3) bereitstellenden Spülbehälter (2), der der Aufnahme von zu reinigendem Spülgut dient, und eine Wärmepumpeneinrichtung (18), aufweisend einen Verdampfer (22), der innerhalb eines Wassertanks (24) angeordnet ist, und einen Verflüssiger (19), mit dem Wärme von dem in einem Strömungskreislauf (30) der Wärmepumpeneinrichtung (18) geführten Arbeitsmedium auf die Spülflotte übertragen werden kann,
sowie einen dem Spülbehälter (2) nebengeordneten und mit diesem thermisch gekoppelten Wasserbehälter (31) umfasst, der an den Wassertank (24) strömungstechnisch angeschlossen ist,
**dadurch gekennzeichnet**
**dass** ein Zyklus durchlaufen wird, bei dem während der Durchführung und/oder nach Abschluss eines Spülprogramms im Wassertank (24) befindliches Wasser (25) zumindest teilweise abgeführt wird, dem Wasserbehälter (31) zugeführt wird, wo es für eine vorgebbare Verweildauer und/oder bis zum Erreichen einer vorgebbaren Wassertemperatur verbleibt, und anschließend in den Wassertank (24) rücküberführt wird, wodurch sich im Wassertank eine Mischtemperatur in der Mischung aus Bestandswasser einerseits und rückgeführtem, aufgewärmtem Wasser andererseits ergibt,
und **dass** der Zyklus für eine vorgebbare Anzahl an Zyklen wiederholt durchgeführt wird.

2. Verfahren nach Anspruch 1,
**dadurch gekennzeichnet, dass**
der Wasserbehälter (31) außenseitig am Spülbehälter (2) angeordnet ist.

3. Verfahren nach einem der vorhergehenden Ansprüche,
**dadurch gekennzeichnet, dass**
der Spülbehälter (2) und der Wassertank (24) thermisch entkoppelt sind.

4. Verfahren nach einem der vorhergehenden Ansprüche,
**dadurch gekennzeichnet, dass**
der Wasserbehälter (31) Abschnitte (41, 42) mit unterschiedlichen Größenabmessungen insbesondere in Dickenrichtung aufweist.

5. Verfahren nach einem der vorhergehenden Ansprüche,
**dadurch gekennzeichnet, dass**
der vom Wasserbehälter (31) bereitgestellte Volumenraum in Kammern (44, 45) unterteilt ausgebildet ist.

6. Verfahren nach einem der vorhergehenden Ansprüche,
**dadurch gekennzeichnet, dass**
der Wasserbehälter (31) und/oder der Wassertank (24) an den Spülbehälter (2) strömungstechnisch angeschlossen sind/ist.

7. Verfahren nach einem der vorhergehenden Ansprüche,
**dadurch gekennzeichnet, dass**
der Wasserbehälter (31) und/oder der Wassertank (24) an einen Frischwasseranschluss (13) strömungstechnisch angeschlossen sind/ist.

8. Verfahren nach einem der vorhergehenden Ansprüche,
**dadurch gekennzeichnet, dass**
innerhalb des Wasserbehälters (31) ein Wärmetauscher (38) angeordnet ist, der an den Spülbehälter (2) strömungstechnisch angeschlossen ist.

9. Verfahren nach Anspruch einem der vorhergehenden Ansprüche, bei dem die vorgebbare Wassertemperatur mit 10°C bis 20°C gewählt wird.

10. Verfahren nach einem der vorhergehenden Ansprüche, bei dem das Wasser (25) unter strömungstechnischer Zwischenschaltung des Spülbehälters (2) in den Wassertank (24) rücküberführt wird.

11. Verfahren nach einem der vorhergehenden Ansprüche, bei dem nach Erreichen der vorgebbaren Anzahl an Zyklen das Wasser (25) in den Spülbehälter (2) geleitet wird oder bis zum Beginn eines nächsten Spülprogramms im Wasserbehälter (31) verbleibt.

12. Verfahren nach einem der vorhergehenden Ansprüche, bei dem aus dem Spülbehälter (2) stammende Spülflotte durch den im Wasserbehälter (31) angeordneten Wärmetauscher (38) geführt wird.

13. Verfahren nach einem der vorhergehenden Ansprüche, bei dem die Wassertemperatur im Wassertank (24) und/oder im Wasserbehälter (31) bestimmt wird, wobei hierfür vorzugsweise die Temperatur der sich im Spülbehälter (2) befindlichen Spülflotte nach Einleitung von Wasser aus dem Wassertank (24) und/oder dem Wasserbehälter (31) sensiert wird.

14. Geschirrspülmaschine, welche dazu eingerichtet ist, gemäß einem Verfahren nach einem der vorhergehenden Ansprüche betrieben zu werden.

## Claims

1. Method for operating a dishwasher, in particular a domestic dishwasher, which comprises a washing container (2) which provides a washing chamber (3) and is used for receiving washware to be cleaned, a heat pump device (18) having an evaporator (22) which is arranged inside a water tank (24) and a condenser (19) by means of which heat can be transferred from the working medium carried in a flow circuit (30) of the heat pump device (18) to the washing solution, and a water container (31) which is arranged next to the washing container (2), is thermally coupled to said washing container and is fluidically connected to the water tank (24),
**characterised**
**in that** a cycle is performed in which, while a washing program is being carried out and/or after a washing program has ended, water (25) in the water tank (24) is at least partially carried away and supplied to the water container (31) where it remains for a predeterminable residence time and/or until a predeterminable water temperature is reached, and is then returned to the water tank (24), as a result of which there is a mixed temperature in the mixture of supply water and heated returned water in the water tank, and in that the cycle is carried out repeatedly for a predeterminable number of cycles.

2. Method according to claim 1,
**characterised in that**
the water container (31) is arranged on the outside of the washing container (2).

3. Method according to either of the preceding claims,
**characterised in that**
the washing container (2) and the water tank (24) are thermally decoupled.

4. Method according to any of the preceding claims,
**characterised in that**
the water container (31) has portions (41, 42) of different dimensions, in particular in the thickness direction.

5. Method according to any of the preceding claims,
**characterised in that**
the volumetric space provided by the water container (31) is divided into chambers (44, 45).

6. Method according to any of the preceding claims,
**characterised in that**
the water container (31) and/or the water tank (24) are/is fluidically connected to the washing container (2).

7. Method according to any of the preceding claims,
**characterised in that**
the water container (31) and/or the water tank (24) are/is fluidically connected to a fresh water connection (13).

8. Method according to any of the preceding claims,
**characterised in that**
a heat exchanger (38) is arranged inside the water container (31) and is fluidically connected to the washing container (2).

9. Method according to any of the preceding claims, wherein the predeterminable water temperature is selected so as to be from 10°C to 20°C.

10. Method according to any of the preceding claims, wherein the water (25) is returned to the water tank (24) with the fluidic interposition of the washing container (2).

11. Method according to any of the preceding claims, wherein, after the predeterminable number of cycles has been reached, the water (25) is fed into the washing container (2) or remains in the water container (31) until the start of the next washing program.

12. Method according to any of the preceding claims, wherein washing solution coming from the washing container (2) is passed through the heat exchanger (38) arranged in the water container (31).

13. Method according to any of the preceding claims, wherein the water temperature in the water tank (24) and/or in the water container (31) is determined, the temperature of the washing solution in the washing container (2) preferably being measured for this purpose after water from the water tank (24) and/or the water container (31) has been introduced.

14. Dishwasher designed to be operated using a method according to any of the preceding claims.

## Revendications

1. Procédé de fonctionnement d'un lave-vaisselle, en particulier d'un lave-vaisselle ménager, lequel comprend un réservoir de lavage (2) fournissant un espace de lavage (3) servant à recevoir les articles à laver, et un dispositif de pompe à chaleur (18) présentant un évaporateur (22) disposé à l'intérieur d'un bac d'eau (24) et un condenseur (19) au moyen duquel de la chaleur peut être transférée depuis le fluide de travail conduit dans un circuit d'écoulement (30) du dispositif de pompe à chaleur (18) vers le bain de lavage, ainsi qu'un réservoir d'eau (31) disposé adjacent au réservoir de lavage (2), accouplé thermiquement à celui-ci et en communication fluidique avec le bac d'eau (24), **caractérisé en ce**
**qu'**un cycle est exécuté, dans lequel, lors de la mise en œuvre et/ou après la fin d'un programme de lavage, de l'eau (25) située dans le bac d'eau (24) est au moins partiellement évacuée, est acheminée vers le réservoir d'eau (31), dans lequel elle reste pendant un temps prédéfini et/ou jusqu'à ce qu'une température de l'eau prédéfinie est atteinte, puis est renvoyée dans le bac d'eau (24), ce qui entraîne une température mixte dans le bac d'eau dans le mélange d'eau de réserve d'une part et d'eau réchauffée et renvoyée d'autre part,
et **que** le cycle est mis en œuvre de façon répétée pendant un nombre prédéfini de cycles.

2. Procédé selon la revendication 1,
**caractérisé en ce que**
le réservoir d'eau (31) est disposé à l'extérieur du réservoir de lavage (2).

3. Procédé selon l'une des revendications précédentes,
**caractérisé en ce que**
le réservoir de lavage (2) et le bac d'eau (24) sont découplés thermiquement.

4. Procédé selon l'une des revendications précédentes,
**caractérisé en ce que**
le réservoir d'eau (31) présente des sections (41, 42) de différentes dimensions, en particulier dans le sens de l'épaisseur.

5. Procédé selon l'une des revendications précédentes,
**caractérisé en ce que**
l'espace volumique fourni par le réservoir d'eau (31) est divisé en chambres (44, 45).

6. Procédé selon l'une des revendications précédentes,
**caractérisé en ce que**
le réservoir d'eau (31) et/ou le bac d'eau (24) sont en communication fluidique avec le réservoir de lavage (2).

7. Procédé selon l'une des revendications précédentes,
**caractérisé en ce que**
le réservoir d'eau (31) et/ou le bac d'eau (24) sont en communication fluidique avec un raccord d'eau douce (13).

8. Procédé selon l'une des revendications précédentes,
**caractérisé en ce que**
un échangeur de chaleur (38) est disposé à l'intérieur du réservoir d'eau (31) et est en communication fluidique avec le réservoir de lavage (2).

9. Procédé selon l'une des revendications précédentes, dans lequel la température de l'eau prédéfinie est choisie entre 10 °C et 20 °C.

10. Procédé selon l'une des revendications précédentes, dans lequel l'eau (25) est renvoyée vers le bac d'eau (24) avec interposition en communication fluidique du réservoir de lavage (2).

11. Procédé selon l'une des revendications précédentes, dans lequel, après avoir atteint le nombre de cycles prédéfinis, l'eau (25) est acheminée dans le réservoir de lavage (2) ou reste dans le réservoir d'eau (31) jusqu'au début d'un prochain cycle de lavage.

12. Procédé selon l'une des revendications précédentes, dans lequel le bain de lavage provenant du réservoir de lavage (2) est conduit à travers l'échangeur de chaleur (38) disposé dans le réservoir d'eau (31).

13. Procédé selon l'une des revendications précédentes, dans lequel la température de l'eau dans le bac d'eau (24) et/ou dans le réservoir d'eau (31) est déterminée, la température du bain de lavage situé dans le réservoir de lavage (2) étant de préférence détectée à cet effet après l'introduction d'eau depuis le bac d'eau (24) et/ou le réservoir d'eau (31).

14. Lave-vaisselle configuré pour fonctionner selon un procédé selon l'une des revendications précédentes.
